# EUROPEAN PATENT SPECIFICATION

(11) **EP 3 885 106 B1**
(45) Date of publication and mention of the grant of the patent: **15.11.2023**
(21) Application number: 20382229.1
(22) Date of filing: 25.03.2020
(51) Int. Cl.: B29C 64/118, B33Y 10/00, B33Y 80/00, B29C 70/38

(54) **METHOD FOR MANUFACTURING A PART**
VERFAHREN ZUR HERSTELLUNG EINES TEILS
PROCÉDÉ DE FABRICATION D'UNE PIÈCE

(43) Date of publication of application: 29.09.2021
(73) Proprietor: Airbus Operations, S.L.U., 28906 Getafe (Madrid) (ES)
(72) Inventor: HERNÁIZ LÓPEZ, Guillermo, E-28906 Getafe, Madrid (ES); BUTRAGUEÑO MARTÍNEZ, Asunción, E-28906 Getafe, Madrid (ES); SÁNCHEZ GÓMEZ, José, E-28906 Getafe, Madrid (ES)
(74) Representative: ABG Intellectual Property Law, S.L.

(56) References cited:
- EP-A1- 2 878 435
- EP-A1- 3 597 525
- US-A1- 2017 259 502
- US-A1- 2018 079 131
- US-A1- 2018 297 272

## Description

### TECHNICAL FIELD OF THE INVENTION

The present invention belongs to the field of manufacturing, in particular to the field of manufacturing parts with low or no porosity by using an Additive Manufacturing technology.

More specifically, the invention is of special application in the manufacturing of printed parts for structural applications where conventional compaction is not feasible.

### BACKGROUND OF THE INVENTION

Historically, aircraft parts with structural applications have been made of aluminium alloys. Last decades, with the development of composite manufacturing technologies, such structural parts have been manufactured with different techniques as, for instance, co-bonding or co-curing of Carbon Fibre Reinforced Plastic (CFRP) constituent parts.

Nevertheless, all these manufacturing technologies require that the components roll over different stages carrying operations in order to manufacture separately different constituent parts, which would be afterwards assembled together. This constitutes a time-demanding process predetermining the production rate of aircrafts. As a consequence, the final component is achieved after a series of different manufacturing steps that increment the cost and time of fabrication.

This drawback, along with the high recurring/non-recurring costs associated to these conventional manufacturing techniques, has promoted the advent of Additive Manufacturing (AM) technologies in aeronautics.

Commonly, these AM technologies use a computer with 3D modelling software (Computer Aided Design or CAD), an additive manufacturing tool (e.g. machine equipment) and filaments of layering material. The CAD sketch is a 3D electronic model of the final 3D object built. The AM tool is able to read in data from the CAD file (both the cross-section geometry and surface pattern) and lays down or deposits successive filaments (then forming up layers) of liquid, powder, sheet material or the like, by at least one head in a layer-upon-layer fashion to fabricate a 3D object.

Therefore, the possibility of reducing the buy-to-fly ratio (i.e. the ratio between mass of material that is required to produce a part and the mass of material in the finished aeronautical structure) while enabling rapid prototyping has set a promising roadmap for printing polymeric parts layer-upon-layer.

Nevertheless, it is well-known that the mechanical properties for printed composite parts are still well inferior to aluminium parts or composite parts manufactured by conventional techniques. This is, on one hand, because of the inherent defects that conventionally printed parts present, such as voids, porosity and, on the other hand, because of poor adhesion between contiguous filaments either from the same layer or a different one.

Porosity or process-induced voids form mainly as a result of stacking substantially circular cross-section filaments forming layers and typically these voids extend along the printing direction. Another typical local defect is the absence of polymer chain interfusion between adjacent filaments which renders inter-laminar shear strength ('ILSS') very low and results in weak printed parts when subjected to certain stresses.

Therefore, when these conventionally printed parts are tested or put into service, these voids and printing defects may act as stress concentrators causing the parts to fail prematurely.

Current solutions mostly provide *in situ* compaction mechanisms based on a roller that often applies pressure to deposited layers against the printing bed in order to close voids and strengthen bonding. Newest solutions rely on vacuum beds to assist the printing process but, although consolidated pieces may be obtained, tight dimensions are not achievable yet.

Nevertheless, it is not always possible to benefit from these available compaction solutions, either because complex geometries make difficult that rollers can roll extensively and uniformly, or because some printing tools are not compatible with these compaction equipment.

Therefore, there is a need in the industry for an easy and effective fabrication of structural printed parts that can assure imparting mechanical properties so as to meet structural requirements and further can be extensively applied regardless the use of compaction systems and for any intended geometry.

Document US 2018/297272 A1 discloses methods of printing an object via a 3-dimensional printer.

Document US 2018/079131 A1 discloses methods, systems, and devices for the manufacture of 3D printed components with structurally integrated metal objects using an additive manufacturing system enhanced with a range of possible secondary embedding processes.

### SUMMARY OF THE INVENTION

The present invention provides a solution for the aforementioned problems, by a method for manufacturing a part layer-upon-layer using Additive Manufacturing technology according to claim 1. In dependent claims, preferred embodiments of the invention are defined.

In a first inventive aspect, the invention provides a method for manufacturing a part layer-upon-layer using Additive Manufacturing technology, wherein the method comprises selectively depositing at least a first type filament and a second type filament.

Throughout this entire document, "Additive Manufacturing technologies" (AM) will be understood as those technologies that build 3D objects by adding layer-upon-layer material, where the material (either meltable material or matrix material in the case of reinforced materials) changes to a liquid upon the application of heat and solidifies (or hardens) to a solid when cooled.

Before printing, the digital CAD sketch of the 3D part is digitally sliced into multiple horizontal sections or layers. The printer controller then uses this generated slicing to manufacture the part sequentially with one layer at a time (i.e. layer-by-layer), with each layer adhering or bonding to the previous one.

Many technologies are encompassed within Additive Manufacturing technologies, depending on the form of the material and machine technology used. Among others, it may be pointed out the *Selective Laser Sintering* (SLS), *Stereolithography* (SLA), *Multi-Jet Modelling* (MJM), or *Fused Filament Fabrication* (FFF).

The *Fused Filament Fabrication* (FFF) is a process oriented fabrication which involves the use of materials in the form of filaments injected through at least one indexing nozzle onto a build sheet. The nozzle(s) trace(s) the surface pattern for each particular layer with the material hardening prior to the deposition of the next layer. The process repeats until the piece is completed, i.e. is printed.

In a preferred embodiment of the method of the invention, the part is printed using *Fused Filament Fabrication* (FFF). In FFF, each deposited layer is formed by a set of oriented filaments. As known, FFF is a particular example of *3D-Printing* (3DP).

According to the invention, the second type filament differs from the first type filament at least in the cross-sectional dimension.

For those printer tools allowing to set a layer height, this cross-sectional dimension of the first or second type filament is understood as the height setting that establishes the height of each layer formed by filaments. Setting a thicker layer height entails that the printed part will have a coarser (i.e. less fine) detail rendering the layers more visible. On the other hand, setting a thinner layer height allows a higher level of detail on the part but hinders production time.

Otherwise, if a filament (either first or second type) has a non-constant cross-sectional shape, the cross-sectional dimension shall be understood as the cross-sectional area or the value measured at the thickest point of such filament.

Therefore, the method comprises performing at least once the following steps:
a. forming a layer by depositing first type filaments, at least a portion of the first type filaments being deposited alongside each other thus creating at least one channel, and
b. depositing at least a portion of a second type filament along said channel.

That is, the slicer program of the printing tool provides a non-uniform slicing of the 3D CAD part since the layers now have different heights by alternating layers formed by first type filaments or second type filaments at least for a portion of the part. In other words, alternating steps a) and b).

Therefore, a "layer" is understood as a set of filaments deposited during the same depositing step. According to the invention, a layer may comprise filaments deposited alongside each other and/or spaced apart filaments. Layers of first type filaments have at least some filaments deposited alongside each other, while layers of second type filaments may be formed by spaced apart filaments. For instance, in 2.5D fabrication, each filament comprised in a very same layer is at the same height from the mould.

A pair of first type filaments deposited alongside each other for a certain length produces an intermediate recess, notch or channel that extends along them for such length.

According to the invention, a second type filament with a different cross-sectional dimension is deposited over such channel thus touching simultaneously both previously deposited first type filaments.

Therefore, unlike prior art manufacturing processes where subsequent layer deposition of first type filaments induces interstitial voids, the present invention fills or occupies such voids with second type filaments.

Conventional manufacturing processes typically involve that a first type filament be deposited over a channel created by two filaments of the same type deposited alongside each other, or similarly that a pair of first type filaments be deposited over two filaments of the same type deposited alongside each other.

As the part is made of polymeric materials, fused filaments are driven out the nozzles thus tending to flatten upon deposition. Then, fused second type filaments may adapt better to the channel shape created by the pair of harden first type filaments in order to further mitigate porosity. In other words, the part manufactured by the present invention is closer to a homologous bulk part.

The avoidance or reduction of voids causes filaments to touch along more areas which, in combination with the fact that printing processes are typically performed under heat, promotes filament bonding and polymer interfusion thus improving inter-layer mutual adhesion.

As a result, not only mechanic properties such as ILSS, tensile strength, compression strength, etc. of the printed parts are highly improved but also dimensional tolerances.

Balancing the deposition of first or second type filaments does not jeopardize manufacturing lead time since no fine slicing is needed for the whole part. Therefore, the present invention speeds up time in comparison with fine printing.

In short, the consolidated printed parts manufactured by the method according to the invention have, in comparison with conventionally printed parts, high-resolution surfaces, less porosity or voids, and no interfaces.

For instance, aeronautical parts conventionally made in pieces and then assembled together (thus having interfaces) can be manufactured, according to the present invention, integrally in one-shot meeting any structural specification. This results in parts with no interfaces (i.e. are integral or self-sealed). Since thermoplastic printing materials exhibit a hygroscopic tendency, the resulting tightness advantageously reduces water ingestion issues and de-bonding. Also, there may be an operation enhancement as the printed part has a better structural behaviour.

The undesired effect of water ingestion is stressed in aeronautics, where structural parts are exposed in service to a humid environment.

Thus, in a preferred embodiment, the printed part is an aeronautical part.

According to the invention, the first type filaments have a fibre volume content above 50% and the second type filaments have a fibre volume content below 50%.

Advantageously, a fibre volume content of at least 50% enhances the mechanical properties of the final part as it improves the stiffness/weight ratio of the part. The fact that the second filament has less fibre volume content makes it easier to fill gaps but without drastically reducing the mechanical properties of the final part.

In a preferred embodiment, the first type filament comprises a greater cross-sectional dimension than the second type filament.

In a particular embodiment, at least one first type filament and/or at least one second type filament has a circular, triangular, or ellipsoidal cross-sectional shape.

In a particular embodiment, the first type filament is deposited at a first temperature while the second type filament is deposited at a second temperature.

Heads typically comprise an extruder which uses torque and pinch systems to feed and retract the filaments fed, in order to drive the required amount of material to be deposited. The head may also comprise a heater block for heating the meltable material up to any precise temperature. Once the material is heated, it is forced out of a nozzle by a reduction in its diameter letting the material to be deposited more accurately.

Therefore, according to this embodiment, two heads may be used, one for each filament type, in order to drive the filament out at a different temperature. Alternatively, with a single head, the heater block selectively heats the first or second type filaments to their respective precise temperatures.

Either way, preferably, at least the second temperature at which the second type filament is to be deposited is above its glass-transition temperature in order to adapt better to the channel shape upon being laid down.

In addition, as it was already mentioned, when a single or a pair of first type filament(s) is/are deposited over a channel created by two filaments of the same type deposited alongside each other, a process-induced void is created, either a substantially triangular void or a substantially kite-shape void, respectively.

Thus, in a particular embodiment, at least a portion of a second type filament is deposited along (and over) a first type filament so that to infill a channel to be created by a subsequent pair of first type filaments deposited alongside each other.

Therefore, in a particular embodiment, the cross-sectional dimension and/or length of the second type filament is selected so as to infill such void, that is, there should be neither shortage nor excess of infilling material in the voids.

In this regard, because of the strong dependence on the temperature when forming a bond between adjacent filaments/layers (diffusion-based fusion), typical printing tools pre-heat their printing chambers or the surroundings in order to reach and maintain an operating printing temperature determined by the materials chosen.

Therefore, according to the present invention, the method is performed at a suitable operating printing temperature for the material of the first type and/or second type filament.

Preferably, this operating temperature is the glass transition temperature of the printed part material in order to soften the deposited filaments and slightly enable shaping. If the first and second type filaments are of different materials, the operating temperature will be the lowest glass transition temperature between both materials.

For instance, typical values of glass transition temperature are approx. 143 °C for PEEK (Polyetherketoneketone), 50°C for PA66 (e.g. nylon), and 105°C for ABS (Acrylonitrile butadiene styrene). Although the precise value of glass transition temperature depends on the measuring technique, all the known results provide values similar enough as to apply the present invention.

In addition, since printing speed sets the residence time of fused filament over a prior filament already hardening, it may affect convection heat transfer between filaments/layers. Nevertheless, for the purposes envisaged with this invention, it has been found that printing speed has a minimum effect on final properties insofar regular values are used.

Then, the cooling down (normally defined in terms of °C/min) of the printed part from the operating temperature leads to its solidification and, therefore, has an impact on its final mechanical features as the material shrinks and internal stresses start to appear. If cooling speed is slow enough, residual thermal stresses on the printed part are mostly avoided.

Accordingly, in a particular embodiment, the method further comprises the step of cooling down the part at a predefined cooling speed. Preferably, this cooling speed is selected for such part to achieve a certain degree of crystallization. Most preferably, this degree of crystallization is of at least 32%.

In a particular embodiment, the first type filaments and/or the second type filament is made of fibrous material reinforcement embedded within meltable material.

By depositing fibrous material reinforcement with meltable material, a lightweight design is achieved because less amount of material is needed to meet the structural requirement compared to using solely meltable material.

According to the invention, the fibrous material reinforcement may be in the form of fibrils (very short and/or irregular fibres), nanofibers, carbon fillers, short fibres (length <1mm), or continuous fibres (extended continuously along the whole filament and thus along the whole length/width of the part when manufactured), for instance. Preferably, the fibrous material reinforcement is in the form of continuous fibres and/or short-fibres, wherein continuous fibres are preferred.

Additionally, the fibrous material reinforcement may be glass, carbon, polymer fibres or any other conventional material used as reinforcement. Among them, carbon is preferred.

According to the invention, the meltable material may be a thermoplastic material such as PA (Polyamide), PPS (Polyphenylene sulfide), PA66, ABS (Acrylonitrile butadiene styrene), PEEK (Polyether ether ketone), PAEK (Polyaryletherketone) or PEKK (Polyetherketoneketone). In a preferred embodiment, the meltable material is in the form of a filament for better storing and handling.

In a preferred embodiment, the meltable material is a thermoplastic material of any of the following: PEKK, PPS, PAEK, or PEEK. More preferably the meltable material is PAEK or PEEK. Most preferably the meltable material is PEEK or PPS.

In a particular embodiment, at least one of the second type filaments is discontinuous in form of pellets or spheres.

Preferably, this second type filaments either in form of pellets or spheres are homogeneously deposited over the channel.

If the second type filament is fibrous material reinforcement embedded within meltable material in the form of pellets or spheres, this fibrous material reinforcement is preferably in the form of fibrils, nanofibers, carbon fillers, or short fibres.

Furthermore, some layers may be formed by second type filaments only with meltable material, others with fibrous material reinforcement embedded within meltable material, or a combination thereof.

Similarly, some layers may be formed by continuous second type filaments and others with second type filaments in the form of pellets or spheres, or a combination thereof.

The manufactured part may be formed entirely by alternating layers made from the first type filaments and second type filaments. That is, steps a) and b) are repeated up to manufacturing the entire part.

On the other hand, only a portion of the part can be printed by alternating these two layers (for instance performing steps a) and b) only a number of times onto a partially manufactured part). Therefore, these alternating layers are deposited to better suit future load requirements during operation and service. Therefore, an optimized structural arrangement is achieved while saving printing time.

For instance, any structural part designed with an overloaded section or which has a crucial section typically oversized by a safety factor may benefit from the present invention by alternating these layers of two different filament types within this susceptible section.

In order to further improve tightness or reduce water ingestion issues and de-bonding, in a particular embodiment, the method further comprises the step of:
c. depositing at least a portion of a second type filament along channels formed by filaments with first cross-sectional dimension forming part of an outer wall of the part.

In this embodiment, in addition, the outer wall of the part can be made entirely by layer(s) of second type filaments in order to further improve dimensional tolerances.

It is to be noted that, in this embodiment, "layers" of second type filaments also encompasses a non-stratified bunch of second type filaments.

Advantageously, this allows that layers of first type filaments be oriented according to expected loads while further layer(s) of second type filaments are provided so as to offset theoretical dimensions of the part. In other words, strength requirements are untied from dimensional tolerances.

In an embodiment, a third or further type filaments can be selectively deposited together with the first type filament and a second type filament. Accordingly, it renders the method more versatile in regard of applications.

This third or any further type filament has at least a different cross-sectional dimension than the first and second type filaments and can benefit from any of the features defined in relation to the second type filament such as the discontinuity or cross-sectional section.

The present disclosure also provides a part manufacturable layer-upon-layer using Additive Manufacturing technology according to any of the embodiments of the first inventive aspect. In a preferred embodiment, the part is an aeronautical part.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows layers made by first type filaments deposited alongside each other with process-induced triangular voids.
- Figure 2: This figure shows layers made by first type filaments deposited alongside each other with process-induced kite-shaped voids.
- Figures 3a, 3b: These figures show a cut view of (3a) alternating deposited layers made of first and second type filaments and (3b) the same layers as in 3a but with second type filaments melted filling the voids.
- Figure 4: This figure shows layers made by second type filaments disposed so as to offset external dimensions.

### DETAILED DESCRIPTION OF THE INVENTION

The person skilled in the art should recognize that aspects described herein can be embodied either as a method for manufacturing a part, or as the part itself.

The invention defines a method for manufacturing a part layer-upon-layer using Additive Manufacturing technology, wherein the method comprises performing at least once the following steps:
a. forming a layer by depositing first type filaments, at least a portion of the first type filaments (1) being deposited alongside each other thus creating at least one channel (3), and
b. depositing at least a portion of a second type filament (2) along said channel (3)
wherein the second type filament (2) differs from the first type filament (1) at least in the cross-sectional dimension.

The method according to the invention uses an additive manufacturing tool comprising a printing chamber in turn housing a build sheet and at least one head configured to be moved over said build sheet and to deposit either first type filament (1) or second type filaments (2).

If there is only one head, it may be equipped with different nozzles interchangeable during the printing process or a single nozzle with variable geometry and/or dimension. As mentioned, the head(s) may also comprise a heater block for heating the meltable filaments (1, 2) up to any precise temperature.

This tool may further comprise spool(s) for storing the filaments (1, 2).

In an embodiment, the head is configured to be moved over the build sheet in the three-translational axes (X, Y, Z) and/or rotations (around X, Y, Z) for printing more complex geometries. Optionally, the head(s) may be limited to move over the build sheet just in horizontal directions (X, Y) while the movement in vertical Z-direction is performed by the build sheet, thus implementing the so-called 2.5D fabrication. These movements are typically performed by actuators and/or servos, one for each direction and/or rotations.

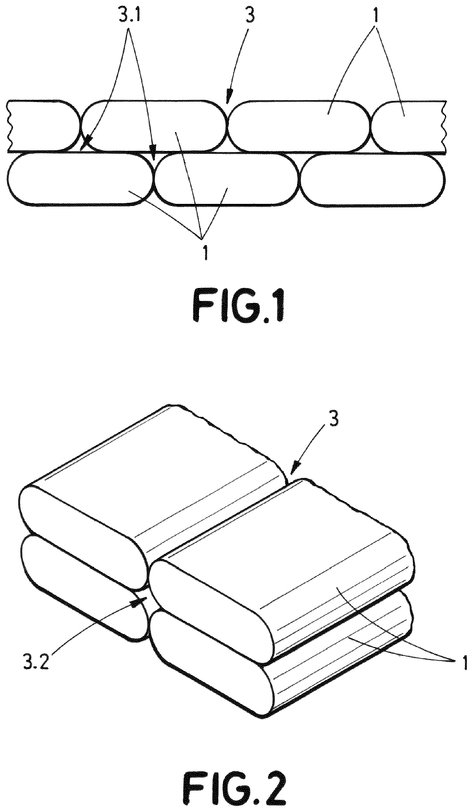

Figure 1 depicts layers made by first type filaments (1) deposited alongside each other and having created triangular voids (3.1).

This process-induced triangular voids (3.1) occurs when a single first type filament (1) is deposited over a channel (3) created by two filaments (1) of the same type deposited alongside each other.

It is to be noted that a channel (3) in terms of the invention is created when two filaments (1) of the same type are alongside each other, while the process-induced void (3.1) requires further filament(s) (1) to be disposed above them, i.e. a closed perimeter.

Figure 2 depicts layers made by first type filaments (1) deposited alongside each other and having created kite-shaped voids (3.2).

Kite-shaped voids (3.2) occur when a pair of first type filaments (1), disposed alongside each other, are deposited over a channel (3) created by other two filaments (1) of the same type also deposited alongside each other.

Figure 1 and figure 2 depict the deposited first type filaments (1) flattened caused by such gravitational and temperature-related mechanisms that take place during hardening.

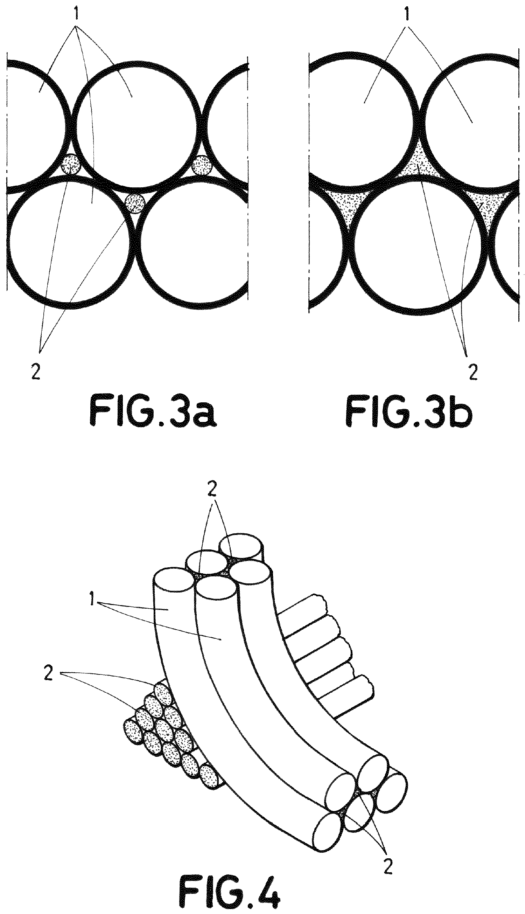

Figure 3a depicts a cut view of a hypothetical situation where layers made by first type filaments (1) are alternated with layers made of second type filaments (2) but without having being fused yet.

It can be observed that, in this example, both the first type filaments (1) and the second type filaments (2) have a circular cross-sectional shape. Nevertheless other cross-sectional shapes can be selected or combined to maximize infill.

As visible in figure 3a, a second type filament (2) has been deposited along a channel (3) formed by a pair of first type filaments (1) deposited alongside each other underneath. Additionally, two second type filaments are shown, which have been deposited on two respective first type filaments, along them, so as to infill a channel to be created by a subsequent pair of first type filaments deposited over it alongside each other.

Further, it is seen that the first type filaments (1) have a greater cross-sectional dimension than the second type filaments (2). In fact, the particular cross-sectional dimension of the second type filaments is chosen so as to infill such voids (3.1, 3.2) formed during deposition, thus taking into account thermal expansion and shrinkage of the filaments (1, 2) during fusing and hardening.

This situation where second type filaments (2) infill the former voids during deposition steps can be seen in figure 3b.

As mentioned above, although not shown in the features, a third or further type filaments can be also selectively deposited together with the first type filament and the second type filament.

Figure 4 depicts a layer of first type filaments (1) filled with second type filaments (2) oriented in a first direction. Additionally, it can be seen a set of layers made by second type filaments (2) oriented in a second direction, different from the first direction, so as to offset external dimensions. Further, these second type filaments (2) oriented in a second direction facilitate the printing process as they can be used as support material.

Since layers of first type filaments (1), normally reinforced, can be therefore oriented according to expected loads, these further layer(s) of second type filaments (2) are provided so as to offset theoretical dimensions of the part. As a result, strength requirements can be untied from dimensional tolerances.

In addition, the method may comprise a step of depositing at least a portion of a second type filament (2) along channels (3) formed by first type filaments (1) forming part of an outer wall of the part.

This embodiment may be of application, for instance, for producing a local roving or fill and thus create any required area to get the final shape of the part allowing the production of more complex shapes.

In aeronautical parts, especially for 'T-profile' composite parts such as stringers, a roving is a composite filler adapted to fill the space between both feet (i.e. the diverting point of both halves of the 'T-profile' composite part). Therefore, a 'roving' will be understood as a bundle of second type filaments which may be unidirectional and unspun or otherwise shaped into patterns to provide structural continuity and void avoidance.

Furthermore, if the outer wall of the part is made entirely by layer(s) of second type filaments (2), not only dimensional tolerances are improved but the resulting tightness prevents water ingestion and de-bonding.

## Claims

1. Method for manufacturing a part layer-upon-layer using Additive Manufacturing technology, wherein the method comprises performing at least once the following steps:
a. forming a layer by depositing first type filaments (1) which are made of fibrous material reinforcement embedded within a meltable material, preferably thermoplastic material, at least a portion of the first type filaments (1) being deposited alongside each other thus creating at least one channel (3), and
b. depositing at least a portion of a second type filament (2) which are made of fibrous material reinforcement embedded within a meltable material, preferably thermoplastic material, along said channel (3);
wherein the second type filament (2) differs from the first type filament (1) at least in the cross-sectional dimension, and
wherein the first type filaments (1) have a fibre volume content above 50% and the second type filaments (2) have a fibre volume content below 50%.

2. Method for manufacturing according to claim 1, wherein the first type filament (1) comprises a greater cross-sectional dimension than the second type filament (2).

3. Method for manufacturing according to any of claims 1 or 2, wherein at least one first type filament (1) and/or at least one second type filament (2) has a circular, triangular, or ellipsoidal cross-sectional shape.

4. Method for manufacturing according to any of claims 1 to 3, wherein at least one of the second type filaments (2) is discontinuous in form of pellets or spheres.

5. Method for manufacturing according to claims 1-4, wherein the fibrous material reinforcement of the second type filament (2) is in the form of fibrils, nanofibers, carbon fillers, or short fibres.

6. Method for manufacturing according to any of the previous claims, wherein at least a portion of a second type filament (2) is deposited along a first type filament (1) so that to infill a channel (3) to be created by a subsequent pair of first type filaments (1) deposited alongside each other.

7. Method for manufacturing according to any of the previous claims, wherein the cross-sectional dimension and/or length of the second type filament (2) is selected so as to infill a process-induced void (3.1, 3.2).

8. Method for manufacturing according to any of the previous claims, wherein the first type filament (1) is deposited at a first temperature while the second type filament (2) is deposited at a second temperature.

9. Method for manufacturing according to claim 8, wherein the method further comprises the step of cooling down the part at a predefined cooling speed, preferably the cooling speed being selected for such part to achieve a degree of crystallization of at least 32%.

10. Method for manufacturing according to any of the previous claims, wherein a portion of the part is manufactured by alternating the performance of steps a) and b) a certain number of times onto a partially manufactured part.

11. Method for manufacturing according to any of claims 1 to 10, wherein the method further comprises the step of:
c. depositing at least a portion of a second type filament (2) along channels (3) formed by first type filaments (1) forming part of an outer wall of the part.

12. Method for manufacturing according to claim 11, wherein the outer wall of the part is made entirely by at least one layer of second type filaments (2).

## Patentansprüche

1. Verfahren zur schichtweisen Herstellung eines Teils unter Verwendung von additiver Fertigungstechnologie, wobei das Verfahren wenigstens einmaliges Durchführen der folgenden Schritte umfasst:
a. Bilden einer Schicht durch Abscheiden von Filamenten von einem ersten Typ (1), die aus Faserverstärkungsmaterial hergestellt sind, eingebettet in ein schmelzbares Material, vorzugsweise thermoplastisches Material, wobei wenigstens ein Teil der Filamente vom ersten Typ (1) nebeneinander abgeschieden werden, um wenigstens einen Kanal (3) zu erzeugen, und
b. Abscheiden wenigstens eines Teils von Filamenten von einem zweiten Typ (2), die aus Faserverstärkungsmaterial hergestellt sind, eingebettet in ein schmelzbares Material, vorzugsweise thermoplastisches Material, entlang des Kanals (3);
wobei sich das Filament vom zweiten Typ (2) von dem Filament vom ersten Typ (1) wenigstens in der Querschnittsabmessung unterscheidet, und
wobei die Filamente vom ersten Typ (1) einen Faser-Volumengehalt von über 50 % aufweisen und die Filamente vom zweiten Typ (2) einen Faser-Volumengehalt von unter 50 % aufweisen.

2. Herstellungsverfahren gemäß Anspruch 1, wobei das Filament vom ersten Typ (1) eine größere Querschnittsabmessung als das Filament vom zweiten Typ (2) aufweist.

3. Herstellungsverfahren gemäß einem der Ansprüche 1 und 2, wobei wenigstens ein Filament vom ersten Typ (1) und/oder wenigstens ein Filament vom zweiten Typ (2) eine kreisförmige, dreieckige oder ellipsoide Querschnittsform aufweist.

4. Herstellungsverfahren gemäß einem der Ansprüche 1 bis 3, wobei wenigstens eines der Filamente vom zweiten Typ (2) diskontinuierlich in der Form von Pellets oder Kugeln vorliegt.

5. Herstellungsverfahren gemäß Ansprüchen 1-4, wobei das Faserverstärkungsmaterial des Filaments vom zweiten Typ (2) in der Form von Fibrillen, Nanofasern, Kohlenstoff-Füllstoffen oder kurzen Fasern vorliegt.

6. Herstellungsverfahren gemäß einem der vorstehenden Ansprüche, wobei wenigstens ein Teil eines Filaments vom zweiten Typ (2) entlang eines Filaments vom ersten Typ (1) abgeschieden wird, um einen Kanal (3) zu füllen, der durch ein nachfolgendes Paar von Filamenten vom ersten Typ (1), die nebeneinander abgeschieden werden, gebildet werden soll.

7. Herstellungsverfahren gemäß einem der vorstehenden Ansprüche, wobei die Querschnittsabmessung und/oder Länge des Filaments vom zweiten Typ (2) ausgewählt wird, um einen prozessinduzierten Hohlraum (3.1, 3.2) zu füllen.

8. Herstellungsverfahren gemäß einem der vorstehenden Ansprüche, wobei das Filament vom ersten Typ (1) bei einer ersten Temperatur abgeschieden wird, während das Filament vom zweiten Typ (2) bei einer zweiten Temperatur abgeschieden wird.

9. Herstellungsverfahren gemäß Anspruch 8, wobei das Verfahren ferner den Schritt des Abkühlens des Teils mit einer vorgegebenen Kühlgeschwindigkeit umfasst, wobei die Kühlgeschwindigkeit für den Teil vorzugsweise ausgewählt wird, um einen Kristallisationsgrad von wenigstens 32 % zu erzielen.

10. Herstellungsverfahren gemäß einem der vorstehenden Ansprüche, wobei ein Teil des Teils durch Abwechseln der Durchführung der Schritte a) und b) für eine bestimmte Anzahl von Malen auf einen teilweise gefertigten Teil gefertigt wird.

11. Herstellungsverfahren gemäß einem der Ansprüche 1 bis 10, wobei das Verfahren ferner den Schritt umfasst:
c. Abscheiden wenigstens eines Teils eines Filaments vom zweiten Typ (2) entlang von Kanälen (3), die von Filamenten vom ersten Typ (1) gebildet werden, um einen Teil einer Außenwand des Teils zu bilden.

12. Herstellungsverfahren gemäß Anspruch 11,
wobei die Außenwand des Teils vollständig von wenigstens einer Schicht von Filamenten vom zweiten Typ (2) gebildet wird.

## Revendications

1. Procédé de fabrication d'une pièce couche après couche au moyen de la technologie de fabrication additive, le procédé comprenant la réalisation au moins une fois des étapes suivantes :
a. formation d'une couche par dépôt de filaments d'un premier type (1) qui sont constitués d'un renforcement en matériau fibreux incorporé à l'intérieur d'un matériau fusible, de préférence un matériau thermoplastique, au moins une partie des filaments du premier type (1) étant déposés les uns le long des autres, créant ainsi au moins un canal (3), et
b. dépôt d'au moins une partie d'un filament d'un deuxième type (2) qui est constitué d'un renforcement en matériau fibreux incorporé à l'intérieur d'un matériau fusible, de préférence un matériau thermoplastique, le long dudit canal (3) ;
dans lequel le filament du deuxième type (2) diffère du filament du premier type (1) au moins par la dimension en coupe transversale, et
dans lequel les filaments du premier type (1) ont une teneur volumique en fibres supérieure à 50 % et les filaments du deuxième type (2) ont une teneur volumique en fibres inférieure à 50 %.

2. Procédé de fabrication selon la revendication 1, dans lequel le filament du premier type (1) présente une plus grande dimension en coupe transversale que le filament du deuxième type (2).

3. Procédé de fabrication selon l'une quelconque des revendications 1 et 2, dans lequel au moins un filament du premier type (1) et/ou au moins un filament du deuxième type (2) ont une forme en coupe transversale circulaire, triangulaire, ou ellipsoïdale.

4. Procédé de fabrication selon l'une quelconque des revendications 1 à 3, dans lequel au moins un des filaments du deuxième type (2) est discontinu sous forme de pastilles ou de sphères.

5. Procédé de fabrication selon l'une quelconque des revendications 1 à 4, dans lequel le renforcement en matériau fibreux du filament du deuxième type (2) se présente sous la forme de fibrilles, de nanofibres, de charges carbonées, ou de fibres courtes.

6. Procédé de fabrication selon l'une quelconque des revendications précédentes, dans lequel au moins une partie d'un filament du deuxième type (2) est déposée le long d'un filament du premier type (1) de manière à remplir un canal (3) devant être créé par une paire consécutive de filaments du premier type (1) déposés le long l'un de l'autre.

7. Procédé de fabrication selon l'une quelconque des revendications précédentes, dans lequel la dimension en coupe transversale et/ou la longueur du filament du deuxième type (2) sont sélectionnées de manière à remplir un vide induit par le processus (3.1, 3.2).

8. Procédé de fabrication selon l'une quelconque des revendications précédentes, dans lequel le filament du premier type (1) est déposé à une première température tandis que le filament du deuxième type (2) est déposé à une deuxième température.

9. Procédé de fabrication selon la revendication 8, le procédé comprenant en outre l'étape de refroidissement de la pièce à une vitesse de refroidissement prédéfinie, la vitesse de refroidissement étant de préférence sélectionnée pour cette pièce pour atteindre un degré de cristallisation d'au moins 32 %.

10. Procédé de fabrication selon l'une quelconque des revendications précédentes, dans lequel une partie de la pièce est fabriquée par réalisation en alternance des étapes a) et b) un certain nombre de fois sur une pièce partiellement fabriquée.

11. Procédé de fabrication selon l'une quelconque des revendications 1 à 10, le procédé comprenant en outre l'étape de :
c. dépôt d'au moins une partie d'un filament du deuxième type (2) le long de canaux (3) formés par des filaments du premier type (1) formant une partie d'une paroi externe de la pièce.

12. Procédé de fabrication selon la revendication 11, dans lequel la paroi externe de la pièce est entièrement constituée d'au moins une couche de filaments du deuxième type (2).
